# EUROPEAN PATENT APPLICATION

(11) **EP 1 504 814 A1**
(43) Date of publication of application: **09.02.2005**
(21) Application number: 03386020.6
(22) Date of filing: 07.08.2003
(51) Int. Cl.: B01J 19/12

(54) **Method for the qualitative improvement of the organic and inorganic matter with the use of electromagnetic noise**

(71) Applicant: Gloryquest Holdings Limited, Nicosia (CY)
(72) Inventor: Karlaouzos, Ioannis, Melissia Attiki Athens (GR); Kosmidis, Omiros de Achilea, Thiseio 11851 Athens (GR); Aggelopoulos, Dimitris de Platon, Filotei 15237 Athens (GR)

(57) **Abstract**

Method of qualitative improvement and entropy reduction of the organic and inorganic matter with the use of electromagnetic noise that simulates the natural or cosmic noise. In order to achieve the simulation of the natural prototype, the complex emission must be doubly polarized, counterclockwise and clockwise, positive and negative, with amplitude (intensity) larger than that of the natural prototype. In this way is achieved the entropy reduction in matter by the supplement to it of the missing energy / information. The realization of the method is achieved by the use of a double emission source, negatively and positively polarized, where the negatively polarized emission is finally modulated and emitted by the special, counterclockwise broadband antenna and the positively polarized emission is finally modulated and emitted by the special, clockwise broadband antenna. In this way is achieved the entropy reduction in matter with the amplified emission which simulates the natural prototype.

## Description

The present invention concerns a method that uses electronic technology aiming at the qualitative improvement of the organic and inorganic matter by decreasing its entropy.

The decrease of entropy is achieved by feeding with the proper and necessary energy/information the structure of each atom/molecule/macromolecule and bigger systems in general of the organic and inorganic matter putting in order the structure of the matter. This is achieved with the emission of two opposite and complementary polarized noise emissions, which have to simulate in the best possible way and have to be closer to the characteristics of the natural or cosmic noise. This double emission of the chaotic signal of noise, where the ideal would be to cover the whole electromagnetic spectrum from 1 Hz to 1024 Hz with an analogous increase and decrease of intensity as the prototype of nature is teaching, for immediate results according to each particular application is possible with counterclockwise electron flow emission devices in simultaneous combination with clockwise electron flow emission devices.

Also, for the correct final emission of those two noise signals should be used as emission antennas, a counterclockwise antenna for the counterclockwise emission and a clockwise antenna for the clockwise emission.

As it is well known, the intensity of the natural or cosmic noise is - 174 dbm. Every double synthetic emission as described above, in higher intensity than that of the natural or cosmic noise, has as a result depending on the intensity the proportionately faster improvement of the quality of the matter exposed to this radiation.

Previous technical level constitute the applications for license No: Wo 86014, W0 0134728, EP 10 999 745, EP 1092354, WHO 0011135 of Nikolaou Athanasios which teach that with the emission of a very broad spectrum of electromagnetic waves from 1 Hz to 300 GHz and total mode of their emission either pulsed, or time interrupted, or pulsed and time interrupted, the qualitative improvement ofproducts is actually achieved, that is the decrease of the entropy of their matter. The disadvantages of this method are the following. On one hand it describes different kinds of noise, while the ideal is the natural or cosmic noise, and on the other hand, it is nowhere mentioned that the total emission has to be double, positive and negative, clockwise and anti-clockwise, opposite and complementary, so that the counterclockwise emission influences positively the particulate anions and the clockwise emission influences positively the particulate cations in order to obtain the decrease of the entropy and the balance of the matter. Also, the reference to the use of an antenna or of a system of antennas is vague and the kind of adequate antennas so as to compose a complete system of emission that can achieve the desirable results is not mentioned. The further research that will occur from the present invention, should be focused on the improvement of the double emission signals regarding their quality, because the prototype of nature teaches that the natural noise or the cosmic noise background, that is the pulse of nature, encloses both polarities, positive and negative, and the simulation of the produced signal to that of the natural signal should be technically achieved, as the analogy negative - positive in the natural prototype is 1,3131579 negative to 1 positive.

As it is known, the matter in its basic structure consists of infinite atomic dipoles, so the double emission is needed in order to achieve the harmonic and balanced improvement.

Of course, for the complete counterbalance of the matter, that is counterbalancing the equilibrium of the strong nuclear force with the weak nuclear force, is required qualitatively and quantitatively better and bigger counterclockwise emission. With the term qualitatively I am referring to more emission interruptions per time unit and with the term quantitatively to the intensity of the emission. For example, in the surroundings of liquid waste, where the particulate anions are predominant, the energy/information required is counterclockwise, negatively polarized, so that each one of these anions is fed with the required energy / information of its own identity and with the phenomenon of resonance, they start changing to a better and/or higher condition until they end up to hydrogen or water.

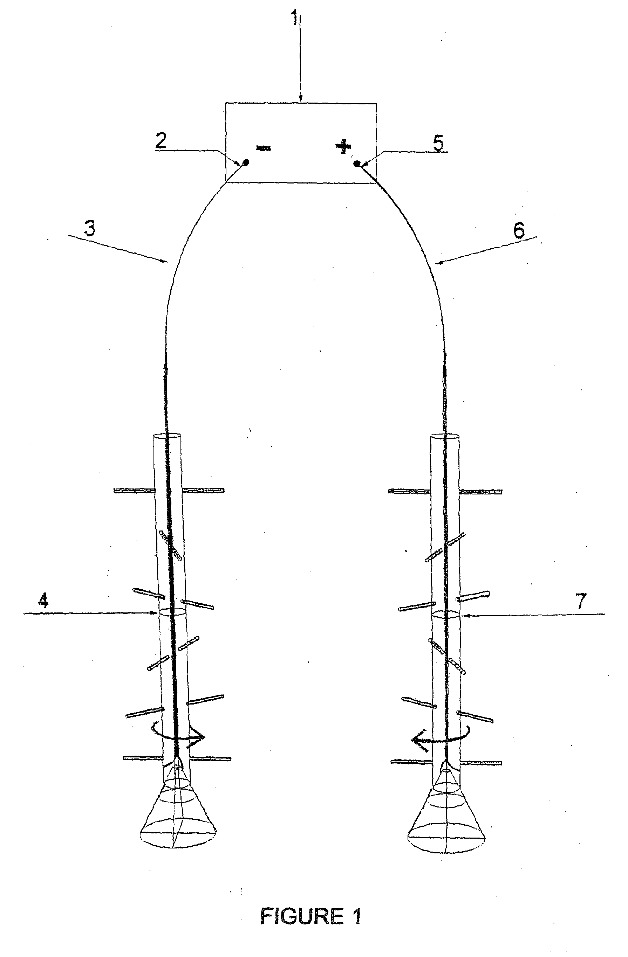

The application mode is the use of a source of double emission of electromagnetic noise (Figure 1) negative (2) and positive (5), where the negative emission, the counterclockwise, is finally emitted by a special, counterclockwise, broadband antenna (4) and the positive emission, the clockwise, is finally emitted by a special, clockwise, broadband antenna (7).

For the realization of the method the existence and use of specific noble metals is important and necessary, because their crystal structure contributes to the correct modulation of the quality of the produced and emitted noise signal. Therefore, from the beginning till the end, only these metals should be used both for the double source (1) and for the coaxial conductors / wires (3,6), which connect the source (1) and the antennas (4,7) as well as for the antennas (4,7). In the double source (1) are used silver and gold, in the conductors (cables) (3,6) are used silver and gold, and in the antennas (4,7) are used silver, gold, platinum, iridium, palladium, rhodium and ruthenium. It has been observed that with the use only of gold for the source of the clockwise emission and for its coaxial conductor, and with the use only of silver for the source of the counterclockwise emission as well as for the coaxial cable toward the antenna, is achieved the outmost uninterrupted and balanced exchange of energy/information without static flows and their emission brings about the best results. The use of the aforementioned noble metals means that the ideal is that all the metal parts for the realization of the method are made only from the noble metals as described above.

Another basic parameter that regulates the speed of the entropy decrease or the decrease of the exposure time of the matter to the radiation for its qualitative improvement is the repetition velocity of the emission or the increase and decrease of the time between two pulses. That is if the regulation of the duty cycle gives us pulse duration of 50 nsec and interruption time between two pulses 70 nsec, the desired result will be achieved sooner than with a regulation, for example, of 200nsec and 250 nsec respectively. The ideal is the regulation of the duty cycle according to the prototype of nature.

Another parameter of lower importance is the width or the intensity of the emission that has more to do with the range of the emission rather than with the speed of the entropy decrease. For example, an emission of total exit power 5+5 Watts is sufficient for the qualitative improvement of 1000 cubic meters of matter. That happens because in nature what is important is the quality of the energy / information and not the quantity (intensity).

For the realization of the invention, for example, are being used a double, counterclockwise and clockwise source of electromagnetic noise resembling the natural noise, and two antennas, of counterclockwise and clockwise direction for the final emission of the two noise signals.

The double source (1) consists of two square pulse oscillators with tunable duty cycle activity. With a tuning that gives square pulses of duration 1 nsec each and time annulation or duration of interruption 1,3 nsec. This signal coming from the counterclockwise oscillator (2) is driven and stimulates a semiconductor (transistor), which is a feeding transmitter, and from its collector we are feeding a free oscillator of exit power of 5 Watts and resonated at the frequency of 250 MHz. In the construction of the free oscillator (2) is being used a counterclockwise resonance coil made of silver, so that the emission produced from this oscillator is negatively polarized and/or counterclockwise. This negatively polarized noise signal is driven through a coaxial wire (3) made of silver to the special broadband, counterclockwise antenna (4), so that the signal having acquired its final modulation from the antenna, finally emits the negative emission and/or simulation phase of the natural noise. In the same way the signal of the other square pulse oscillator (5) is driven and stimulates a semiconductor (transistor) that as a feeding transmitter stimulates a free oscillator of exit power 5 Watts, resonated at the frequency of 230 MHz. In the construction of this free oscillator is used a clockwise resonance coil made of gold, so that the emission produced from this free oscillator is positively polarized and/or clockwise. This positively polarized noise signal is driven through a coaxial conductor made of gold, to the special broadband antenna (7), of clockwise direction, so that the signal having acquired its final modulation from the antenna, emits finally the other, positive emission and/or simulation phase of the natural noise, complementary to the first emission. The simultaneous emission combination of these two noise signal emissions simulates in a great degree the natural prototype. In this way is achieved the transformation of the entropic information from the surrounding the aforementioned system matter, to a balanced, non-entropic matter, through the successful transmission of the necessary and missing energy/information. Also it is possible and better that the simulation of the natural prototype is accomplished by two non polarized white noise generators whose signal is finally modulated by counterclockwise and clockwise special broadband antennas.

## Claims

1. Method of qualitative improvement and entropy reduction of the organic and inorganic matter with the use of electromagnetic noise which is **characterized by** the fact that the electromagnetic noise that is produced and emitted, simulates the natural or cosmic noise, emitted with higher intensity from that of the natural prototype.

2. Method of qualitative improvement and entropy reduction of the organic and inorganic matter with the use of electromagnetic noise according to claim 1, which is **characterized by** the fact that the emission of the electromagnetic noise is double, the one negatively polarized and with counterclockwise electron flow and the other positively polarized and with clockwise electron flow.

3. Method of qualitative improvement and entropy reduction of the organic and inorganic matter with the use of electromagnetic noise according to claims 1 and 2, which is **characterized by** the fact that the negative emission is finally modulated and emitted by a special, counterclockwise, broadband antenna and the positive emission is finally modulated and emitted from a special, clockwise, broadband antenna.
